# EUROPÄISCHE PATENTANMELDUNG

(11) **EP 1 234 963 A1**
(43) Veröffentlichungstag der Anmeldung: **28.08.2002**
(21) Anmeldenummer: 02405086.6
(22) Anmeldetag: 07.02.2002
(51) Int. Cl.: F02C 7/264, F23R 3/34

(54) **Thermische Turbomaschine und Verfahren zum Zünden der thermischen Turbomaschine**

(30) Priorität: 22.02.2001 DE 10108561
(71) Anmelder: ALSTOM (Switzerland) Ltd, 5401 Baden (CH)
(72) Erfinder: Stalder, Marcel, 5313 Klingnau (CH); Joos, Franz, Dr., 79809 Weilheim-Bannholz (DE)

(57) **Zusammenfassung**

Bei einer thermische Turbomaschine mit einem Gehäuse (80), einer Brennkammer (30), einer Zündvorrichtung (10), einer Brennstoffzufuhr (60) und einer Luftzufuhr (70), wobei die Zündvorrichtung (10) aus einem Zündraum (50) und einem in dem Zündraum (50) angeordneten Zünder (51) besteht, wobei die Brennstoffzufuhr (60) und die Luftzufuhr (70) in den Zündraum (50) münden und wobei der Zündraum (50) mit der Brennkammer (30) verbunden ist, wird die Zündvorrichtung (10) ausserhalb des Gehäuses (80) der thermischen Turbomaschine angeordnet. Die Erfindung betrifft auch ein Verfahren zum Zünden der thermischen Turbomaschine ausserhalb des Gehäuses (80).

## Beschreibung

### TECHNISCHES GEBIET

Die vorliegende Erfindung betrifft eine thermische Turbomaschine mit einem Gehäuse, einer Brennkammer und einer Zündvorrichtung gemäss dem Oberbegriff des Anspruchs 1 und ein Verfahren zum Zünden der thermischen Turbomaschine gemäss dem Oberbegriff des Anspruchs 8.

### STAND DER TECHNIK

Um eine kontinuierliche chemische Reaktion in Gang zu setzen, werden die Brennkammern von Feuerungen und Gasturbinenanlagen im allgemeinen über sogenannte Zündhilfen gezündet. Insbesondere sind dazu elektrische Zünd- oder Glühkerzen bekannt, jedoch wird zum Zünden häufig auch eine Gasflamme (Zündfackel) verwendet.

Zunächst werden dabei meist Hilfsbrenner gezündet, welche schliesslich die eigentlichen Brenner entfachen. Bei Gasturbinen wird teilweise auch der Hauptbrennstoff für die Zündbrenner verwendet, d.h. je nach Anwendungsfall Brennöl, Kerosin oder Erdgas. Gelegentlich kommen allerdings auch gut speicherbare Hilfsgase, wie z.B. Propan, zur Anwendung.

Der mittels der Zündhilfen erreichte Zünderfolg hängt von einer Vielzahl von Faktoren ab. Dazu gehören u.a. die Eintrittsbedingungen der Verbrennungsluft, wie Druck, Temperatur und Geschwindigkeit, der verwendete Zündbrennstoff und dessen Bedingungen, die Geometrie und Beschaffenheit der Brennkammer und schliesslich auch die Zusammensetzung der Verbrennungsluft.

Die Zündung von Brennkammern in thermischen Turbomaschinen, also beispielsweise in Gasturbinen, durch eine Zünd- oder Glühkerze ist unter anderem von A. Lefebvre in "Gas Turbine Combustion" (Arthur H. Lefebvre: *Gas Turbine Combustion*, Seiten 222-225 und Seiten 232/233, Hemisphere Publishing Corporation, 1983) beschrieben.

Voraussetzung für die Funktion der Zündvorrichtung ist selbstverständlich, dass am Zünder Bedingungen vorliegen, die das Entstehen einer stabilen und ausreichend kräftigen Zündflamme ermöglichen. Hierbei ist insbesondere die Einstellung des Brennstoff-Luftverhältnisses am Zünder sowie einer zweckmässigen Strömungsgeschwindigkeit im Bereich des Zünders zu nennen.

Insbesondere in den Brennkammern von Gasturbinen lassen sich diese Forderungen oft nur durch den Einsatz spezieller Zündbrenner erfüllen. Die Plazierung des Zünders unmittelbar im Brennraum verbietet sich aufgrund der oben erwähnten Kriterien von selbst. Häufig wird daher der Zünder in einem kleinen Zündraum untergebracht, so dass nur ein kleines Volumen durch die Initialzündung entflammt werden muss. In einem stromab dieses Zündraums gelegenen Flammrohr entsteht sukzessive eine stabile Zündflamme.

Ein solches Zündsystem für Gasturbinen ist aus der Schrift EP-A1-992 661 bekannt. Andere Zünder sind beispielsweise aus den Schriften US-A-2,967,244, US-A-3,404,939, US-A-5,368,474 oder aus der internationalen Veröffentlichung WO96/39578 bekannt. Ein Brenner mit einer Zündeinrichtung für gasförmige Brennstoffe und Sauerstoff ist auch in der Schrift DD-241 457 beschrieben. Weiter ist aus der Schrift DE-A1-4 320 429 ein Verfahren zum Zünden der Hauptflamme einer Brennkammer bekannt.

Unter den Bedingungen, die in den Brennkammern moderner Gasturbinen vorliegen, erfordern die Zündsysteme zur Erhaltung ihrer zuverlässigen Funktion über einen langen Zeitraum einen hohen Wartungsaufwand. Dies ergibt sich bei allen genannten Schriften insbesondere durch die Anordnung des Zünders in unmittelbarer Nähe der Brennkammer und der damit verbundenen hohen thermischen Belastung. Da die Zündung im Innern der thermischen Turbomaschine erfolgt, muss die Hochspannung durch den Luftkanal der Verdichterendluft dorthin geleitet werden. Hier herrschen ebenfalls hohe Temperaturen, so dass eine entsprechende keramische Isolation für die spannungsführenden Teile vorgesehen werden muss.

Somit ist die Lebensdauer der Zünder durch die hohe Beanspruchung der eingesetzten Materialien, sowohl aufgrund der auftretenden thermischen Gradienten und Transienten, als auch durch Vibrationen, beschränkt.

Bekannte, im Automobilbau verwendete Glühzünder, die aufgrund ihrer niedrigeren elektrischen Spannung keine so hocheffiziente Isolation benötigen, können nicht eingesetzt werden, da sie während des Betriebs der Maschine durch die hohen Brennkammertemperaturen vorzeitig altern.

### DARSTELLUNG DER ERFINDUNG

Ziel der Erfindung ist es, die genannten Nachteile zu vermeiden. Der Erfindung liegt die Aufgabe zugrunde, bei einer thermischen Turbomaschine mit einem Gehäuse, einer Brennkammer und einer Zündvorrichtung die gesamte Lebensdauer des Zünders durch eine verringerte thermische Belastung zu erhöhen. Aufgabe der Erfindung ist es auch, ein Verfahren zur Zündung der thermischen Turbomaschine zu schaffen, durch das die Lebensdauer des Zünders erhöht wird.
Erfindungsgemäss wird die Aufgabe bei einer thermischen Turbomaschine gemäss dem Oberbegriff des Anspruchs 1 dadurch gelöst, dass die Zündvorrichtung ausserhalb des Gehäuses der thermischen Turbomaschine angeordnet ist und über ein Zündrohr mit der Brennkammer verbunden ist. Erfindungsgemäss wird die Aufgabe ebenso über ein Verfahren zum Zünden der thermischen Turbomaschine gemäss dem Oberbegriff des Anspruchs 8 dadurch gelöst, dass ein Brennstoff/Luftgemisch in den Zündraum und das Zündrohr eingeführt wird, das Brennstoff/Luftgemisch ausserhalb des Gehäuses der thermischen Turbomaschine in dem Zündraum gezündet wird, und dass die Zündflamme durch das Zündrohr in die Brennkammer gestossen wird.

Vor der Zündung wird das Brennstoff/Luftgemisch im Zündraum und dem Zündrohr gemischt. Durch eine geeignete Wahl der Zuströmgeschwindigkeit der beiden Medien Luft/Brennstoff - höher als die Flammgeschwindigkeit - läuft danach die gezündete Flamme durch das Zündrohr in Richtung der Brennkammer. Dort wird die Flamme aufgrund einer Querschnittserweiterung stabilisiert. Die Zündung der Hauptbrenner erfolgt danach mittels der in der Brennkammer brennenden Zündflamme. Durch diese Anordnung und durch dieses Verfahren werden vorteilhaft die thermischen Belastungen des Zünders, der elektrischen Teile und aller Leitungen insgesamt reduziert, da der Zünder ausserhalb des Gehäuses und somit keinen grossen Temperaturen durch die Brennkammer ausgesetzt ist. Ausserdem sind die Zündelemente nicht der hohen thermischen Strahlung der Flamme bzw. nicht vorbeistreichenden Heissgasen der Brennkammer ausgesetzt.

In einer vorteilhaften Ausführungsform kann das Zündrohr direkt mit der Hauptbrennkammer verbunden sein. Zur besseren Zündung kann die Zündstelle mit einer Querschnittserweiterung zur Brennkammer hin ausgestattet sein. Es ist auch denkbar, den Übergang zum Zündrohr als Düse auszuführen.

Eine andere vorteilhafte Ausführungsform besteht darin, dass die Querschnittserweiterung zur Stabilisierung der Zündflamme nicht direkt an der Brennkammerwand angeordnet ist, sondern gestuft in Form eines Flammrohrs zwischen der Brennkammer und dem Zündrohr. Dies kann damit verbunden sein, dass das Flammrohr über mindestens je eine weitere Leitung mit der Brennstoffzufuhr und mit der Luftzufuhr verbunden ist, so dass die Zündflamme konventionell mit Brennstoff und Brennluft im Inneren der Gasturbine versorgt wird. Insbesondere hat dies den Vorteil, dass die Brennstoff/Luftmengen der Zündfackel unabhängig von der Brennstoffmenge des Zündrohrs eingestellt werden können. Selbstverständlich erfolgt die Zündung des Zündbrenners durch das Zündrohr, das mit zündfähigem Gemisch gefüllt wird, ausserhalb der Maschine. Die Zündflamme läuft durch das Zündrohr in Richtung der Brennkammer und entzündet dort das separat zugeführte Brennstoff-/Luftgemisch. Entsprechend erfolgt das Füllen des Zündrohrs nur einmalig zum Erzeugen der Zündflamme. Danach kann über das Zündrohr der Brennkammer Brennstoff und/oder Luft zugeführt werden.

Weiterhin ist festzustellen, dass der Zünder selbst nur ein kleines Gemischvolumen entzünden muss. Daher wird die für eine sichere Initialzündung minimal aufzuwendende Energie verringert. Die so entstehende Zündflamme tritt aus dem Zündraum durch das Zündrohr in das Flammrohr oder direkt in die Brennkammer ein, wo sie das dort vorhandene Brennstoff-Luft-Gemisch entzündet, wodurch schliesslich die eigentliche Zündflamme für die gesamte Brennkammer entsteht.

Bei erfindungsgemässer Ausführung einer Zündeinrichtung wird die Umströmung des Zünders mit Luft und Brennstoff wirkungsvoll von Parametern wie dem Druck im Brennraum und dem Vordruck von Luft und Brennstoff entkoppelt. Damit können gute Zündbedingungen unmittelbar am Zünder über einen weiten Betriebsbereich der Zündeinrichtung gewährleistet werden.

Vorteilhaft kann vor dem Zündraum eine Mischkammer angeordnet sein, in welche die Brennstoffzufuhr und die Luftzufuhr münden, so dass eine verbesserte Mischung und eine sicherere Zündung erfolgen kann.

Der Zünder kann als Glühzünder oder als Funkenzünder ausgeführt sein. Alterungsprozesse aufgrund der thermischen Einwirkung spielen keine wesentliche Rolle mehr.

Zur sichereren Zündung kann der Zündraum und/oder das Zündrohr und/oder der Zünder katalytisch beschichtet sein und es können auch geeignete Zündhilfen (Oxidatoren, leicht entzündliche Reaktionsstoffe etc.) verwendet werden. Zum selben Zweck kann die Zündflamme am Ausgang des Zündrohrs durch Drall stabilisiert werden.

### KURZE BESCHREIBUNG DER ZEICHNUNG

Nachfolgend wird die Erfindung anhand der Figuren näher erläutert, wobei
- **Fig. 1, 3, 4**: eine erste, zweite und eine dritte Ausführungsform einer erfindungsgemässen thermischen Turbomaschine mit einem Gehäuse, einer Brennkammer und einer Zündvorrichtung zeigen und
- **Fig. 2**: gemäss dem Ausschnitt II in der Figur 1 eine veränderte Geometrie des Übergangs von dem Zündrohr zur Brennkammer darstellt.

### WEG ZUR AUSFÜHRUNG DER ERFINDUNG

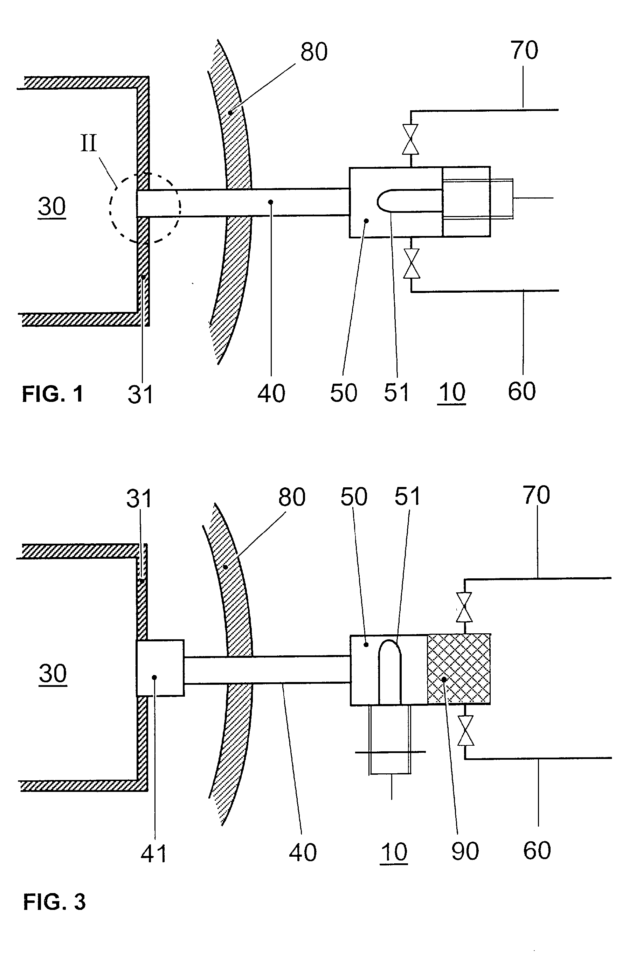

Ein Beispiel für eine erfindungsgemässe thermische Turbomaschine mit einem Gehäuse 80, einer Brennkammer 30, einer Brennkammerwand 31, einer Zündvorrichtung 10, einer Brennstoffzufuhr 60 und einer Luftzufuhr 70, ist in den Figuren 1, 3 und 4 schematisch dargestellt. Die Zündvorrichtung 10 besteht aus einem Zündraum 50 und einem in dem Zündraum 50 angeordneten Zünder 51, welcher elektrisch betrieben wird. Der Zündraum 50 ist erfindungsgemäss ausserhalb des Gehäuses 80 der Gasturbine angeordnet und über ein Zündrohr 40 mit der Brennkammer 30 verbunden. Durch diese Anordnung wird vorteilhaft die thermischen Belastungen des Zünders 51, der elektrischen Teile und aller Leitungen insgesamt reduziert, da der Zünder 51 ausserhalb des Gehäuses 80 angeordnet ist und somit keinen grossen Temperaturen durch die Brennkammer 30 ausgesetzt ist. Ausserdem sind die Zündelemente nicht der hohen thermischen Strahlung der Flamme bzw. nicht vorbeistreichenden Heissgasen der Brennkammer 30 ausgesetzt.

Der Zündraum 50 ist mit einer Brennstoffzufuhr 60 und einer Luftzufuhr 70 verbunden. Über diese Leitungen werden dem Zündraum 50 und dem Zündrohr 40 eine Brennstoff/Luft-Mischung zugeführt, welche durch den Zünder 51 gezündet werden kann. Nach erfolgter Zündung breitet sich die entstehende Flamme durch das Zündrohr 40 in der Richtung der Brennkammer 30 aus. Aufgrund des vorhandenen Gradienten des Brennstoff-Luft-Verhältnisses trifft die Zündflamme mit Sicherheit auf einen Bereich, in dem ein besonders zündfähiges Gemisch vorliegt. Durch dieses Funktionsprinzip wird über einen besonders grossen Bereich des Brennstoff-Luft-Verhältnisses der Zündeinrichtung eine zuverlässige Zündung erreicht. Zudem wird die Flamme durch die Strömungsgeschwindigkeit der zuströmenden Brennstoff/Luftgemisch in Richtung der Brennkammer 30 gestossen. Diese Zündflamme zündet dann die Flamme in der Hauptbrennkammer.

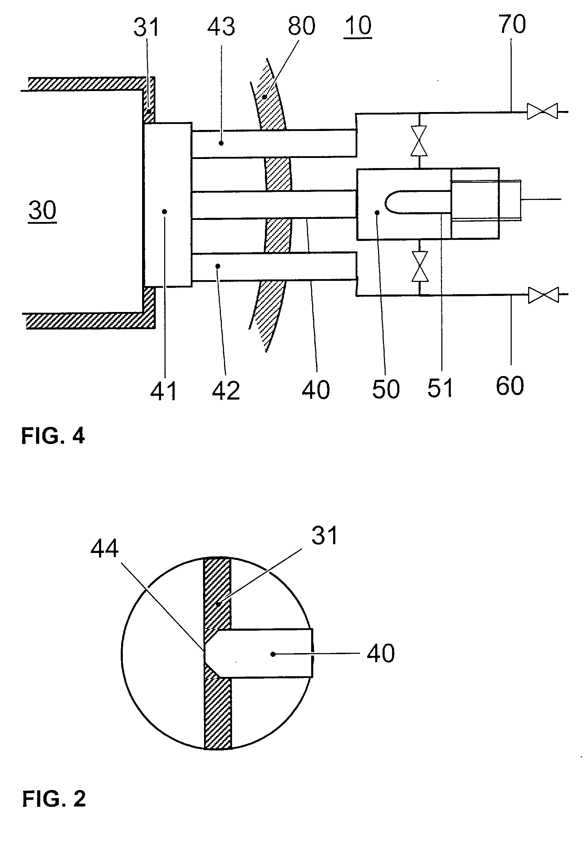

Dies kann, wie in der Figur 1 sichtbar, durch direkte Verbindung des Zündrohrs 40 mit der Brennkammer 30 möglich sein. Der Übergang vom Zündrohr 40 zur Brennkammer 30 ist als Querschnittserweiterung ausgeführt. Durch diese Querschnittserweiterung stellt sich eine Stabilisierung der Flamme ein. Wie in der Figur 2, welche den Ausschnitt II der Figur 1 zeigt, sichtbar, kann der Übergang vom Zündrohr 40 zur Brennkammer 30 als Querschnittserweiterung mit einer dort vorhandenen Düse 44 ausgestattet sein.

Eine andere vorteilhafte Ausführungsform, wie sie in der Figur 3 sichtbar ist, besteht darin, dass die Querschnittserweiterung zur Stabilisierung der Zündflamme nicht direkt an der Brennkammerwand 31 angeordnet ist, sondern gestuft in Form eines Flammrohrs 41 zwischen der Brennkammerwand 31 und dem Zündrohr 40. Dies dient zur vorzeitigen Stabilisierung der Flamme vor dem Erreichen der Brennkammer 30. Wie in der Figur 3 ebenfalls sichtbar, kann vorteilhaft vor dem Zündraum 50 eine Mischkammer 90 angeordnet sein, in welche die Brennstoffzufuhr 60 und die Luftzufuhr 70 münden, so dass eine verbesserte Mischung und eine sicherere Zündung erfolgen kann.

Diese Ausführungsform kann, wie in der Figur 4 dargestellt, damit verbunden sein, dass das Flammrohr 41 über mindestens je eine weitere Leitung 42, 43 mit der Brennstoffzufuhr 60 und mit der Luftzufuhr 70 verbunden ist, so dass die Zündflamme konventionell mit Brennstoff und Brennluft im Inneren der Gasturbine versorgt wird. Insbesondere hat dies den Vorteil, dass die Brennstoff-/Luftmengen der Zündflamme unabhängig von der Brennstoffmenge des Zündrohrs 40 eingestellt werden kann. Selbstverständlich erfolgt die Zündung des Zündbrenners durch das Zündrohr 40, das mit zündfähigem Gemisch gefüllt wird, ausserhalb der Maschine. Die Zündflamme läuft durch das Zündrohr 40 in Richtung der Brennkammer 30 und entzündet dort das separat zugeführte Brennstoff-/Luftgemisch. Entsprechend erfolgt das Füllen des Zündrohrs 40 nur einmalig zum Erzeugen der Zündflamme. Danach kann über das Zündrohr 40 dem Flammrohr 41 Brennstoff und/oder Luft zugeführt werden.

Bei erfindungsgemässer Ausführung der thermischen Turbomaschine wird die Umströmung des Zünders 51 mit Luft und Brennstoff wirkungsvoll von Parametern wie dem Druck im Brennraum und dem Vordruck von Luft und Brennstoff entkoppelt. Damit können gute Zündbedingungen unmittelbar am Zünder 51 über einen weiten Betriebsbereich der Zündeinrichtung gewährleistet werden.

Der Zünder 51 kann in allen erwähnten Ausführungsformen als Glühzünder oder als Funkenzünder ausgeführt sein. Alterungsprozesse aufgrund der thermischen Einwirkung der Brennkammer 30 spielen vorteilhaft keine Rolle mehr.

Zur sichereren Zündung kann der Zündraum 50 und/oder das Zündrohr 40 und/oder der Zünder 51 katalytisch beschichtet sein und es können auch geeignete Zündhilfen (Oxidatoren, leicht entzündliche Reaktionsstoffe etc.) verwendet werden. Zum selben Zweck kann die Zündflamme am Ausgang des Zündrohrs 40 durch Drall stabilisiert werden.

### BEZUGSZEICHENLISTE

- 10: Zündvorrichtung
- 30: Brennkammer
- 31: Brennkammerwand
- 40: Zündrohr
- 41: Flammrohr
- 42: Leitung
- 43: Leitung
- 44: Düse
- 50: Zündraum
- 51: Zünder
- 60: Brennstoffzufuhr
- 70: Luftzufuhr
- 80: Gehäuse
- 90: Mischkammer

## Patentansprüche

1. Thermische Turbomaschine enthaltend ein Gehäuse (80), eine Brennkammer (30), eine Zündvorrichtung (10), eine Brennstoffzufuhr (60) und eine Luftzufuhr (70), wobei die Zündvorrichtung (10) aus einem Zündraum (50) und einem in dem Zündraum (50) angeordneten Zünder (51) besteht, wobei die Brennstoffzufuhr (60) und die Luftzufuhr (70) in den Zündraum (50) münden und wobei der Zündraum (50) mit der Brennkammer (30) verbunden ist,
**dadurch gekennzeichnet, dass**
die Zündvorrichtung (10) ausserhalb des Gehäuses (80) der thermischen Turbomaschine angeordnet ist und über ein Zündrohr (40) mit der Brennkammer (30) verbunden ist.

2. Thermische Turbomaschine nach Anspruch 1,
**dadurch gekennzeichnet, dass**
die Brennkammer (30) direkt mit dem Zündrohr (40) verbunden ist, und der Übergang vom Zündrohr (40) zur Brennkammer (30) als Querschnittserweiterung mit oder ohne Düse ausgeführt ist.

3. Thermische Turbomaschine nach Anspruch 1,
**dadurch gekennzeichnet, dass**
zwischen dem Zündrohr (40) und der Brennkammer (30) ein Flammrohr (41) angeordnet ist, wobei das Flammrohr (41) gegenüber dem Zündrohr (40) eine Querschnittserweiterung aufweist.

4. Thermische Turbomaschine nach Anspruch 3,
**dadurch gekennzeichnet, dass**
das Flammrohr (41) über mindestens je eine weitere Leitung (42, 43) mit der Brennstoffzufuhr (60) und mit der Luftzufuhr (70) verbunden ist.

5. Thermische Turbomaschine nach einem der Ansprüche 1 bis 4,
**dadurch gekennzeichnet, dass**
vor dem Zündraum (50) eine Mischkammer (90) angeordnet ist, in welche die Brennstoffzufuhr (60) und die Luftzufuhr (70) münden.

6. Thermische Turbomaschine nach einem der Ansprüche 1 bis 4,
**dadurch gekennzeichnet, dass**
der Zünder (51) als Glühzünder oder als Funkenzünder ausgeführt ist.

7. Thermische Turbomaschine nach einem der Ansprüche 1 bis 4,
**dadurch gekennzeichnet, dass**
der Zünder (51) und/oder der Zündraum (50) und/oder das Zündrohr (40) katalytisch beschichtet ist.

8. Verfahren zum Zünden einer thermischen Turbomaschine mit einem Gehäuse (80), einer Brennkammer (30), einer Zündvorrichtung (10), einer Brennstoffzufuhr (60) und einer Luftzufuhr (70) gemäss einem der Ansprüche 1 bis 7,
**dadurch gekennzeichnet, dass**
ein Brennstoff/Luft-Gemisch in den Zündraum (50) und das Zündrohr (40) eingeführt wird, das Brennstoff/Luftgemisch ausserhalb des Gehäuses (80) der thermischen Turbomaschine in dem Zündraum (50) gezündet wird, und dass die Zündflamme durch das Zündrohr (40) in die Brennkammer (30) gestossen wird und dort ein Brennstoff/Luft-Gemisch in der Brennkammer (30) entzündet.

9. Verfahren zur Zündung einer thermischen Turbomaschine nach Anspruch 8,
**dadurch gekennzeichnet, dass**
das Zündrohr (40) nur einmalig zum Zünden der Brennkammer (30) genutzt wird und dass danach über das Zündrohr (40) der Brennkammer (30) oder dem Flammrohr (41) Brennstoff und/oder Luft zugeführt wird.

10. Verfahren zur Zündung einer thermischen Turbomaschine nach Anspruch 8 oder 9, soweit der Anspruch 8 von Anspruch 3 abhängt,
**dadurch gekennzeichnet, dass**
dem Flammrohr (41) über die mindestens je eine weitere Leitung (42,43) Brennstoff und Luft zugeführt wird.

11. Verfahren zur Zündung einer thermischen Turbomaschine nach Anspruch 8 bis 10,
**dadurch gekennzeichnet, dass**
die Zündflamme am Ausgang des Zündrohrs (40) durch Drall stabilisiert wird.

12. Verfahren zum Betrieb einer thermischen Turbomaschine nach Anspruch 8 bis 10,
**dadurch gekennzeichnet, dass**
zur sicheren Zündung des Brennstoff/Luftgemisches Zündhilfen verwendet werden.
